# EUROPEAN PATENT SPECIFICATION

(11) **EP 2 306 701 B1**
(45) Date of publication and mention of the grant of the patent: **30.11.2016**
(21) Application number: 10184007.2
(22) Date of filing: 30.09.2010
(51) Int. Cl.: H04N 1/60

(54) **Printing apparatus and calibration method**
Druckgerät und Kalibrierverfahren
Appareil d'impression et procédé d'étalonnage

(30) Priority: 30.09.2009 JP 2009227535
(43) Date of publication of application: 06.04.2011
(73) Proprietor: Seiko Epson Corporation, Shinjuku-ku Tokyo (JP)
(72) Inventor: Hoshii, Jun, Nagano 392-8502 (JP)
(74) Representative: Hoffmann Eitle

(56) References cited:
- JP-A- 2007 295 275
- US-A1- 2005 093 879
- US-A1- 2007 002 344
- US-A1- 2007 059 006
- US-A1- 2007 139 734
- US-A1- 2007 146 742
- US-A1- 2008 043 263
- US-A1- 2008 055 666
- US-B1- 6 222 648

## Description

### BACKGROUND

### 1. Technical Field

The present invention relates to printing apparatuses and calibration methods, and particularly relates to a printing apparatus that forms a printed image by forming ink dots based on ink amounts specified for each pixel of which image data is configured, and to a calibration method for such a printing apparatus.

### 2. Related Art

A calibration method in which, when executing calibration, a user sets desired environment information that he/she feels is optimal has been proposed (see JP-A-2001-213036).

In calibration, increasing the number of color patches that are printed/measured generally makes it possible to attain a higher degree of accuracy; however, this also increases the amount of time, paper, and so on required for the calibration. Accordingly, some users have felt that the time required for calibration is too long, whereas other users have felt that the accuracy they desire cannot be achieved. There has also been a problem in that various color patches of colors unrelated to the colors expressed by an image that is to be printed are formed, and thus the accuracy of the colors expressed by the image that is to be printed cannot be ensured.

JP 2007-295275 discloses a system which generates patch data within the range of color information of print data, inputs a pair of color information measured from the patch data printed, and determine the difference between the pair of color information of the patch data which were printed by different printers.

US 2007/0146742 A1 discloses a spatial correction to improve the result of a printer calibration.

US 6,222,648 B1 discloses a method and apparatus for periodically upgrading the color calibration. A small number of color patch samples are printed and measured at regular intervals during the use of the printing machine.

### SUMMARY

An advantage of some aspects of the invention is to provide a printing apparatus and a calibration method capable of carrying out calibration efficiently, as defined in the independent claims. Advantageous aspects of the invention are subject to the dependent claims.

### BRIEF DESCRIPTION OF THE DRAWINGS

The invention will be described with reference to the accompanying drawings, wherein like numbers reference like elements.
Fig. 1 is a block diagram illustrating the hardware configuration of a computer.
Fig. 2 is a block diagram illustrating the software configuration of a computer.
Fig. 3 is a block diagram illustrating the hardware configuration of a printer.
Fig. 4 is a flowchart illustrating a printing process.
Fig. 5 is a diagram illustrating an example of a settings table PT.
Fig. 6 is a flowchart illustrating a calibration process.
Fig. 7 is a diagram illustrating an example of fixed patch data FPD.
Fig. 8 is a diagram illustrating an example of color measurement data MD.
Fig. 9 is a diagram and a table illustrating the creation of a correction table AT.
Fig. 10 is two graphs illustrating numbers of color patches.
Fig. 11 is a diagram illustrating an exemplary histogram.
Fig. 12 is a diagram illustrating the determination of the formation location and size of a color patch.
Fig. 13 is a diagram illustrating a UI window for accepting calibration settings.
Fig. 14 is a flowchart illustrating a calibration process according to a variation.
Fig. 15 is a diagram illustrating a UI window according to a variation.

### DESCRIPTION OF EXEMPLARY EMBODIMENTS

Hereinafter, an embodiment of the invention will be described according to the following order.
1. Configuration of Calibration Apparatus and Printing Apparatus
2. Printing Process
3. Setting Process
4. Variation

### 1. Configuration of Calibration Apparatus and Printing Apparatus

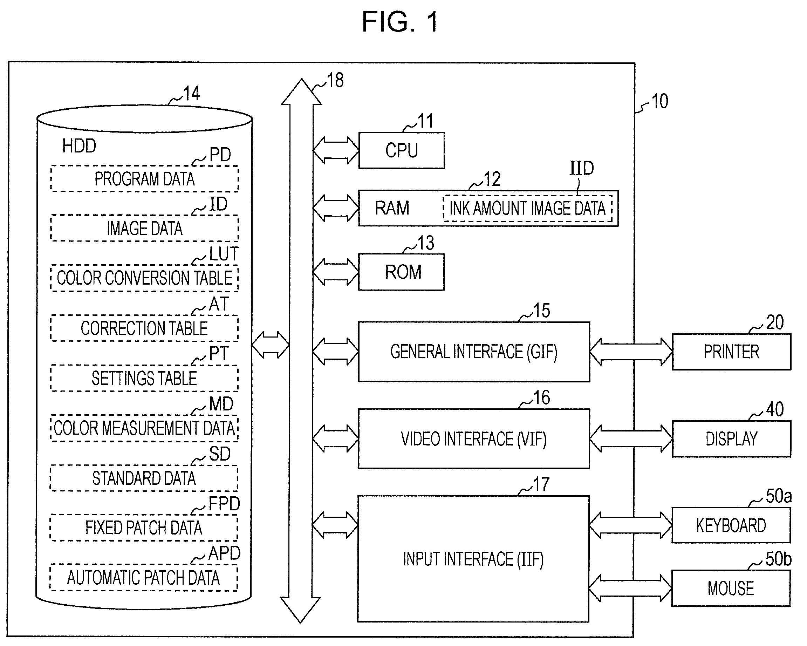

Fig. 1 is a block diagram illustrating the configuration of the computer that executes a profile creation method according to an embodiment of the invention. In Fig. 1, a computer 10 is configured of a CPU 11, a RAM 12, a ROM 13, a hard disk drive (HDD) 14, a general interface (GIF) 15, a video interface (VIF) 16, an input interface (IIF) 17, and a bus 18. The bus 18 implements data communication among the various constituent elements 11 through 17 of which the computer 10 is configured, and controls the communication using a chipset or the like (not shown). Program data PD for executing various types of programs including an operating system (OS) is stored in the HDD 14, and the CPU 11 executes computations based on the program data PD while expanding that program data PD in the RAM 12.

The GIF 15 provides an interface compliant with, for example, the USB standard, and connects an external printer 20 to the computer 10. The printer 20 according to this embodiment is an ink jet printer that forms a printed image by ejecting cyan (C), magenta (M), yellow (Y), and black (K) ink droplets based on ink amounts specified by the computer 10. The VIF 16 connects the computer 10 to an external display 40, and provides an interface for displaying images in the display 40. The IIF 17 connects the computer 10 to an external keyboard 50a and a mouse 50b, and provides an interface by which the computer 10 obtains input signals from the keyboard 50a and the mouse 50b.

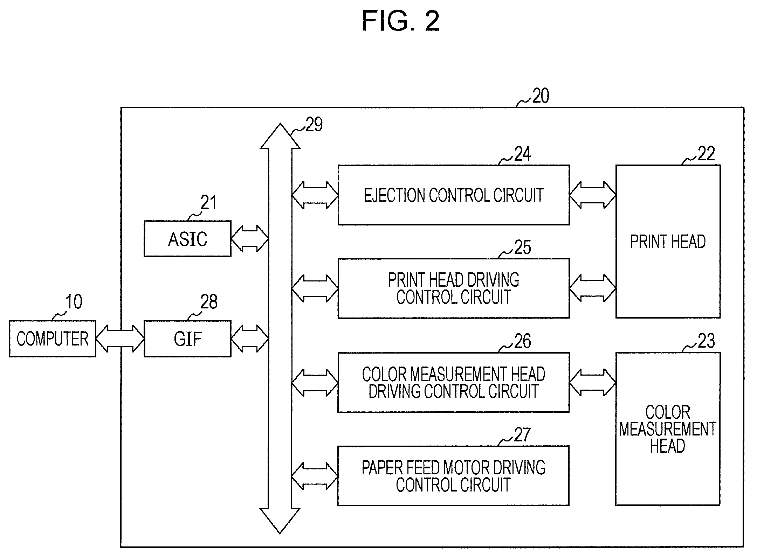

Fig. 2 is a block diagram illustrating the configuration of the printer 20. The printer 20 includes an ASIC 21, a print head 22, a color measurement head 23, an ejection control circuit 24, a print head driving control circuit 25, a color measurement head driving control circuit 26, a paper feed motor driving control circuit 27, a GIF 28, and a bus 29. The print head 22 is supplied with ink from CMYK ink cartridges (not shown) and ejects ink droplets of the CMYK ink onto printing paper based on control performed by the ejection control circuit 24. The print head 22 is driven in the main scanning direction through the driving of a carriage motor that is controlled by the print head driving control circuit 25. A two-dimensional image can be formed upon the printing paper by driving the print head 22 in the main scanning direction and transporting the printing paper in the sub scanning direction by the paper feed motor driving control circuit 27 driving a paper feed motor. By the paper feed motor driving control circuit 27 further driving the paper feed motor, the printing paper onto which an image has been formed is transported to a transport position at which color measurement can be carried out by the color measurement head 23.

The color measurement head 23 is driven in the main scanning direction with respect to the printing paper by the color measurement head driving control circuit 26 controlling the driving of a color measurement head driving motor. The color measurement head 23 is provided with an optical sensor (not shown), and obtains (measures) the color values expressed by the printed image formed upon the printing paper (L*a*b* values in the CIELAB color space). When the color measurement head 23 carries out color measurement, any desired location upon the printing paper can be measured by moving the printing paper in the sub scanning direction using the paper feed motor driving control circuit 27 and the paper feed motor while moving the color measurement head 23 in the main scanning direction. The ASIC 21 is connected to the various constituent elements 24 through 28 via the bus 29, and executes control of the various constituent elements 22 through 27 based on print control data inputted from the computer 10 via the GIF 28. The ASIC 21 also obtains print status information, color measurement data MD, and so on from the various constituent elements 24 through 27 and outputs this information, data, and so on to the computer 10 via the GIF 28.

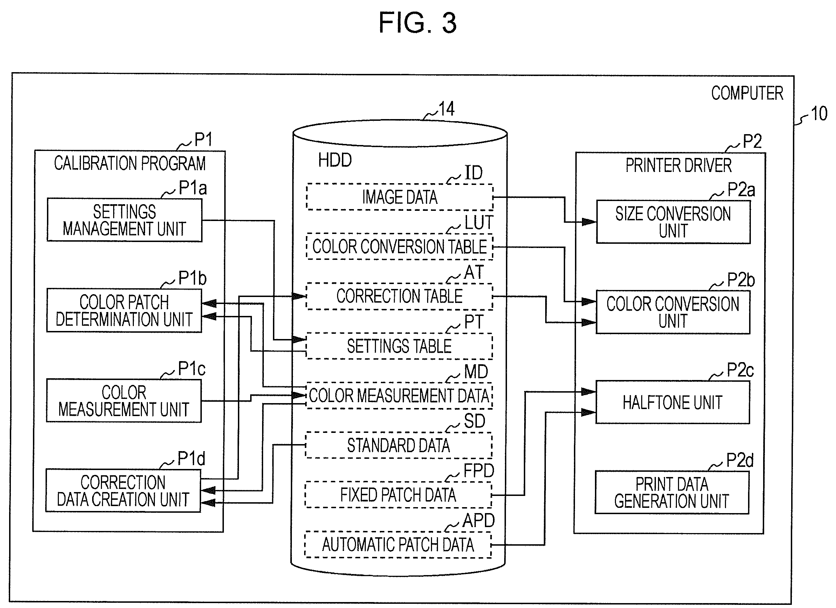

Fig. 3 is a block diagram illustrating the software of a program executed by the computer 10 and data stored in the HDD 14. A calibration program P1 and a printer driver P2 are executed by the computer 10. The calibration program P1 includes a settings management unit P1a, a color patch determination unit P1b, a color measurement unit P1c, and a correction data creation unit P1d. The printer driver P2, meanwhile, is configured of a size conversion unit P2a, a color conversion unit P2b, a halftone unit P2c, and a print data generation unit P2d. Image data ID of the image to be printed, a color conversion table LUT, a correction table AT, a settings table PT, the color measurement data MD, standard data SD, and fixed patch data FPD are stored in the HDD 14.

### 2. Printing Process

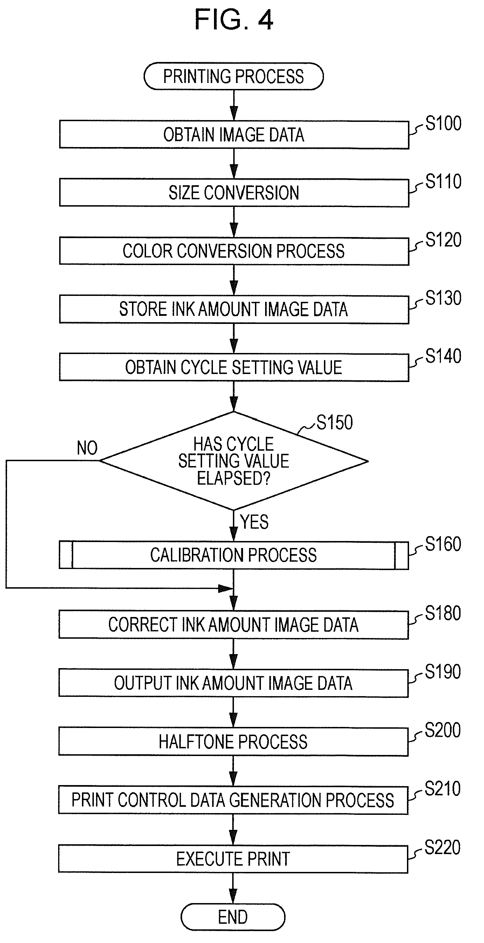

Fig. 4 is a flowchart illustrating a printing process. In step S100, the image data ID to be printed is obtained. The image data ID according to this embodiment is image data in which each pixel holds a tone value for each of red (R), green (G), and blue (B) color elements. In step S110, the size conversion unit P2a converts the size of the image data ID based on the size of the printing paper and the printing resolution. In step S120, the color conversion unit P2b performs color conversion on the image data ID with reference to the color conversion table LUT. The color conversion table LUT defines the correspondence relationships between RGB tone values and CMYK ink amount gradation values indicating ink amounts using multiple grid points, and an ink amount gradation value corresponding to the RGB tone value of each pixel is calculated through an interpolation process. Once the image data ID has been converted into ink amount image data having an ink amount gradation value for each of the pixels, the ink amount image data IID is stored in the RAM 12 in step S130. In step S140, the settings management unit P1a reads out the settings table PT from the HDD 14, and obtains a cycle setting value FP held in the settings table PT.

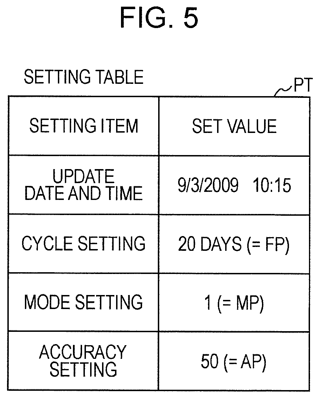

Fig. 5 is a diagram illustrating an example of the settings table PT. The cycle setting value FP is a value for setting the time interval at which to execute calibration, and assumes, for example, a value from 1 day to 365 days. In step S140, the settings management unit P1a reads out the correction table AT from the HDD 14, and obtains an update date/time therefrom. In step S150, the settings management unit P1a determines whether or not the amount of time indicated by the cycle setting value FP has elapsed since the update date/time in the correction table AT. In the case where the amount of time indicated by the cycle setting value FP has not elapsed since the update date/time in the correction table AT, the calibration process is not executed. On the other hand, in the case where the amount of time indicated by the cycle setting value FP has elapsed since the update date/time in the correction table AT, the calibration process is executed in step S160.

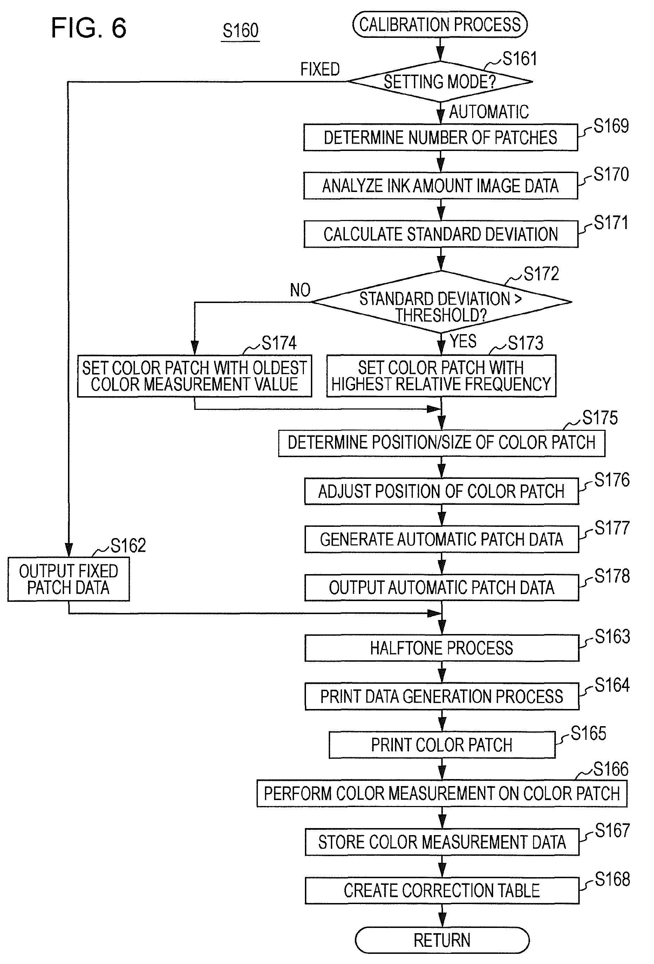

Fig. 6 is a flowchart illustrating the calibration process. In step S161, the color patch determination unit P1b obtains a color patch setting mode setting value MP held in the correction table AT, and identifies the color patch setting based on that mode setting value MP. In this embodiment, the color patch setting can be set to either a fixed mode, which does not correspond to the mode according to the claimed invention, or an automatic mode, which corresponds to the mode according to the claimed invention, and, for example, mode setting values MP of "0" and "1" correspond to the fixed mode and automatic mode, respectively. In the case where the mode setting value MP is "0", or in other words, the case where the color patch setting is the fixed mode, the fixed patch data FPD stored in the HDD 14 is obtained, and that fixed patch data FPD is outputted to the halftone unit P2c (step S162). Fixed patch data FPD is prepared on a printing resolution-by-printing resolution basis, and fixed patch data FPD corresponding to the printing resolution used when printing the image data ID is outputted. The halftone unit P2c executes a halftone process, such as dithering or error diffusion, on the fixed patch data FPD (step S163), after which the print data generation unit P2d executes a process such as rasterizing on the post-halftone process data, and as a result, print control data capable of being controlled by the ASIC 21 of the printer 20 is created (step S164). The print control data is outputted to the printer 20, and the printer 20 prints a color patch (step S165). To be more specific, the color patch is printed by the print head 22 forming ink dots in accordance with the CMYK ink amount specified by the fixed patch data FPD while scanning in the main and sub scanning directions. Accordingly, the various hardware elements that execute step S165 configure a patch printing unit according to the invention.

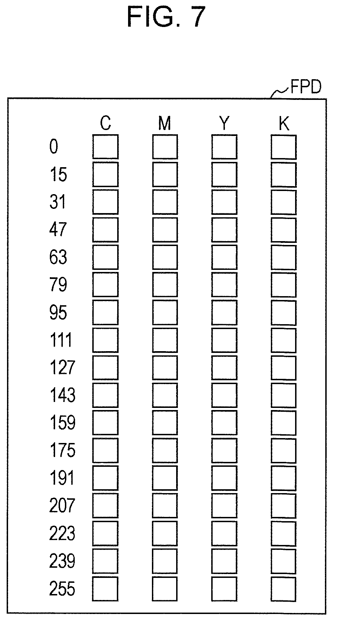

Fig. 7 is a diagram illustrating an example of the fixed patch data FPD. The fixed patch data FPD is image data in which each pixel has a CMYK ink amount, and expresses a color patch group forming a primary color gradation for each of the CMYK inks. In this embodiment, CMYK ink can be ejected in an ink amount range from 0 to 255 gradations, and 18 color patches are formed for each ink by ink amount gradation values (0, 15, 31, 47 and so on up to 255) in which the ink amounts increase by 16 steps between 0 and 255 gradations. Accordingly, a total of 72 colors patches, or 18 gradations x 4 colors, are printed.

When the color patches have been printed, color measurement is executed on the color patches (step S166). To be more specific, the color measurement unit P1c outputs data specifying the location of each color patch to the ASIC 21 of the printer 20, and color measurement is carried out on each color patch by the color measurement head 23 moving in the main scanning direction and the printing paper moving in the sub scanning direction in a sequential manner. In the fixed mode, the color measurement is carried out in five locations (the upper-left corner, the upper-right corner, the center, the lower-left corner, and the lower-right corner) in each color patch, and the average of the values in those five locations is taken as a color measurement value of the color patch. The correction data creation unit P1d stores the color measurement values obtained through the color measurement of the color patches in the color measurement data MD (step S167).

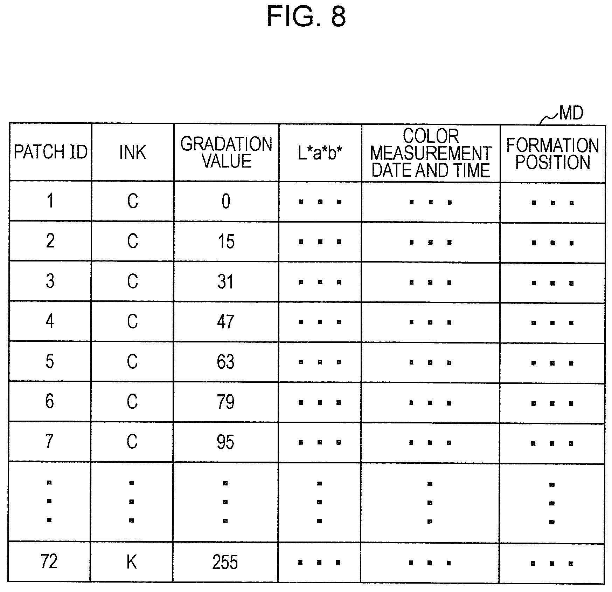

Fig. 8 is a diagram illustrating an example of the color measurement data MD. In the color measurement data MD, color measurement values are held for each of the 18 x 4 color patches, and a measurement date/time indicating when each color measurement value was obtained as well as the formation location of each color patch are held in association therewith. In the case of the fixed mode, all of the 18 x 4 color patches are printed/measured together, and thus identical measurement dates/times are held for all of the color patches. Note that the color measurement data MD corresponds to "history data" according to the invention. The correction data creation unit P1d obtains the standard data SD from the HDD 14, calculates the deviation between the standard color values that should be expressed by each color patch as defined in the standard data SD and the color measurement values in the color measurement data MD, and creates the correction table AT based on that deviation (step S168).

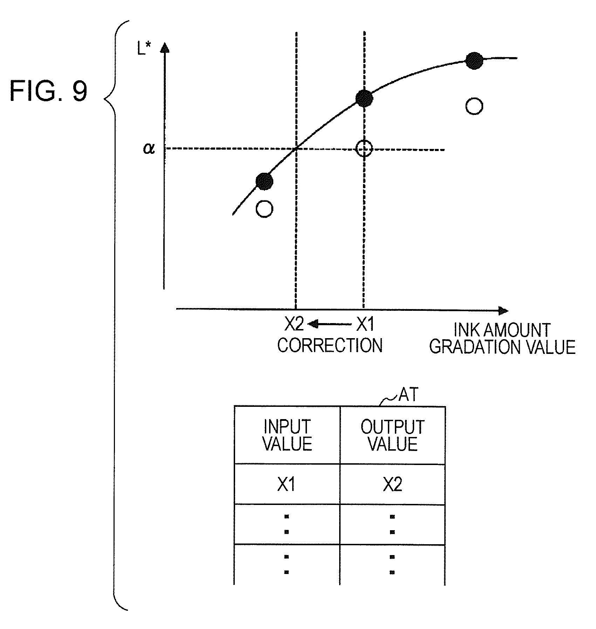

Fig. 9 is a schematic diagram illustrating the creation of the correction table AT. In Fig. 9, the standard value of the color patch (○) and the color measurement value (●) are plotted with respect to the brightness of C ink (an L* value). For example, the standard value of C ink for a color patch whose ink amount gradation value is X1 is α, and in the case where the color measurement value is β ≠ α, it is necessary to correct the ink amount gradation value of the C ink in the vicinity of the ink amount gradation value X1. In the case of an ink amount gradation value X2 when a curve to which the color measurement values have been fitted indicates the standard value α of that color patch, when an ink amount gradation value X1 for the C ink has been inputted, the standard value α can be reproduced by actually performing the printing using the ink amount gradation value X2. The ink amount gradation value X1 is taken as an input value (a precorrection gradation value) and the ink amount gradation value X2 is taken as an output value (a post-correction gradation value), and the correspondence relationship between the input and output values is held in the correction table AT. When the aforementioned correspondence relationship has been stored for the CMYK inks, the current date/time is used as the update date/time for the correction table AT. At the same time, the existing correction table AT is deleted. The calibration process ends when the correction table AT has been created.

When the calibration process has ended, the ink amount image data IID is read out from the RAM 12 and the ink amount gradation values of the CMYK inks in each pixel of the ink amount image data IID are corrected based on the correction table AT (step S180). Meanwhile, in the case where it has been determined in step S150 that the amount of time indicated by the cycle setting value FP has not elapsed since the update date/time of the correction table AT and the calibration process is not to be carried out, steps S180 and on are executed directly. The post-correction ink amount image data IID is outputted to the halftone unit P2c (step S190). The halftone unit P2c executes a halftone process on the ink amount image data IID (step S200), after which the print data generation unit P2d executes a process such as rasterizing on the post-halftone process data, and as a result, print control data capable of being controlled by the ASIC 21 of the printer 20 is created (step S210). The print control data is then outputted to the printer 20, and as a result, the printer 20 prints a printed image corresponding to the image data ID (step S220). In this manner, a printed image in which the standard values are reproduced across the entire range of darknesses in the CMYK inks can be formed. Note that because the calibration process is skipped before the amount of time indicated by the cycle setting value FP set by the user has elapsed, the calibration process can be prevented from being executed at an excessive frequency. However, 72 color patches are printed/measured in the fixed mode, and thus there are cases where the user will feel that this process takes too much time and wastes ink. Accordingly, this embodiment also provides an automatic mode. The automatic mode will be described hereinafter.

In the case where it has been determined in step S161 of Fig. 6 that the automatic mode is set, the color patch determination unit P1b determines the number of color patches to be printed/measured in step S169. The number of color patches is determined based on the cycle setting value FP and an accuracy setting value AP set in the settings table PT.

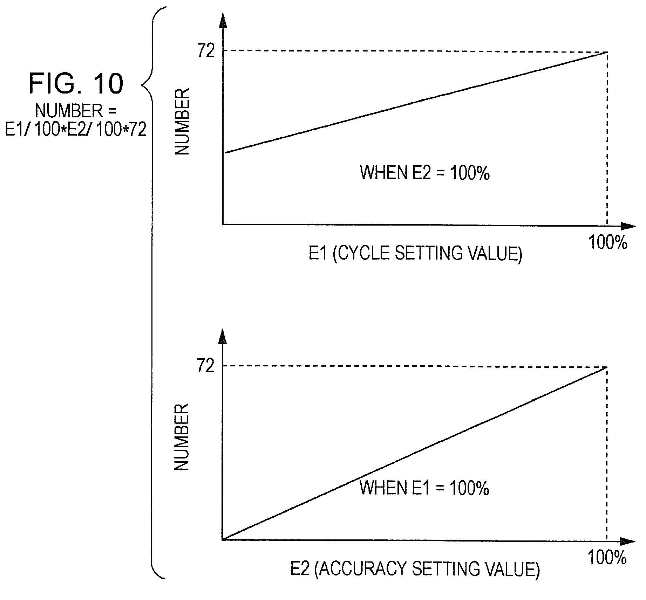

Fig. 10 illustrates two graphs showing the relationship between the number of color patches, the cycle setting value FP, and the accuracy setting value AP. The number of color patches is obtained by multiplying the 72 color patches of the fixed mode by correction coefficients E1 and E2. The correction coefficient E1 is a linearly-increasing function of the cycle setting value FP, and is 1 when the cycle setting value FP is at a maximum value of 365 days. Accordingly, in this case, there is a trend for the number of color patches to increase in the case where the cycle setting value FP is high and the frequency with which the calibration process is executed is low. The correction coefficient E2 is a linearly-increasing function of the accuracy setting value AP, and is 1 when the accuracy setting value AP is a maximum of 100%. Note that the accuracy setting value AP takes on a value from 0 to 100%, and a high value indicates that the user prioritizes accuracy, whereas a low value indicates that the user prioritizes the speed of printing. Accordingly, in this case, there is a trend for the number of color patches to increase as the user prioritizes accuracy and sacrifices speed. In the following step S170, the color patch determination unit P1b reads out the ink amount image data IID from the RAM 12 and analyzes the ink amount gradation values of the CMYK inks in each pixel of the ink amount image data IID. Because the ink amount image data IID has been created in advance during the printing process, it is not necessary to create that data anew for the purpose of the analysis. Furthermore, it is not necessary to analyze the ink amount image data IID itself, and the analysis may be carried out based on reduced image data.

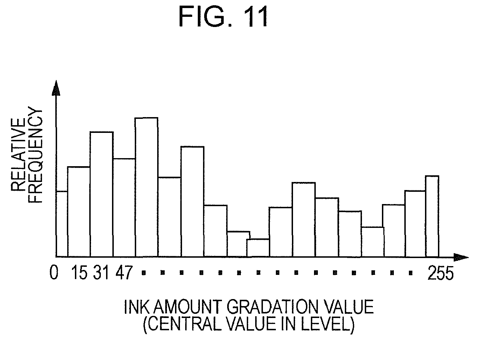

Fig. 11 is a diagram illustrating an example of a histogram created during the stated analysis. In this histogram, levels (with the width of each level being 16) whose central value is the ink amount gradation value (0, 15, 31, 47, and so on up to 255) of the color patch printed in the fixed mode are provided. When the histogram has been created, the standard deviation of the relative frequency of each of the levels in all of the inks is calculated (step S171), and it is then determined whether or not the standard deviation is greater than a predetermined threshold (for example, 5%) (step S172). In the case where the standard deviation is greater than the threshold, the image data ID to be printed can be considered to be characteristic (that is, there is a deviation in the color/darkness). In this case, in step S173, the level with the highest relative frequency is obtained for the number of color patches determined in step S169, and a color patch having an ink amount gradation value that indicates the central value of that level is determined to be formed. In this manner, color patches can be formed for inks and ink darknesses that are used more often in the ink amount image data IID. For example, in the case of a photograph of a landscape, a color patch corresponding to an ink amount by which the color of the sky can be reproduced is formed, thus particularly improving the accuracy with which the color of the sky can be reproduced. Note that the ink corresponding to the ink amount gradation value of the color patch determined in step S173 corresponds to a frequently-used ink according to the invention, whereas the ink amount indicated by the ink amount gradation value corresponds to a frequently-appearing ink amount according to the invention.

Meanwhile, in the case where the image data ID to be printed is not characteristic, it is determined that the color patches having the oldest measurement dates/times at which the color measurement values were stored in the color measurement data MD are to be formed (step S174). In this case, too, it is determined that the color patches having the oldest measurement dates/times (higher level) color patches of a number equivalent to the number of color patches determined in step S169 are to be formed. Next, the color patch determination unit P1b determines the formation location and size of the color patch determined to be formed (step S175). Because the color reproduction characteristics of the printer 20 change over time, it can be thought that the reliability of the color measurement values in the color patch having older measurement dates/times is low. Accordingly, it is possible to preferentially update color measurement values if the reliability thereof is low by printing/measuring color patches having older measurement dates/times. Naturally, a color patch that is different from the color patch printed immediately previous thereto is determined to be printed.

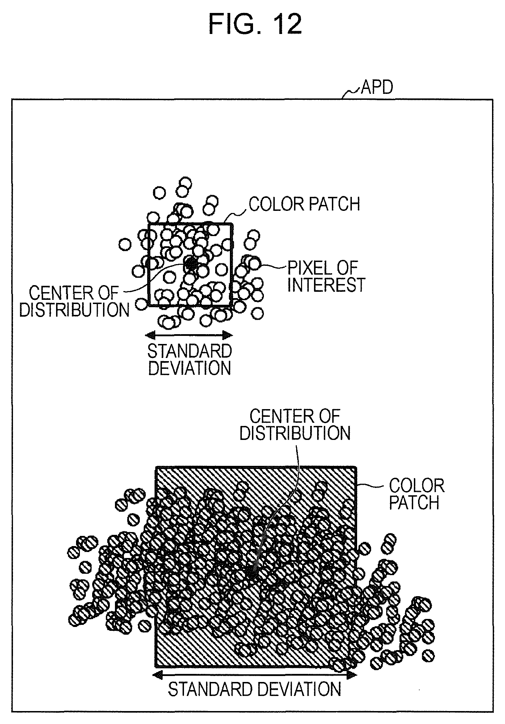

Fig. 12 is a diagram illustrating the determination of the formation location and size of the color patch. The color patch determination unit P1b analyzes, for each color patch, a spatial distribution of pixels (pixels of interest) in the ink amount image data IID belonging to the level taken as the central value as the ink amount gradation value of the color patch determined to be formed. As shown in Fig. 12, the center of distribution coordinates of the location in which the pixels of interest are present and the standard deviation of the distances between the center of distribution coordinates and each pixel of interest are calculated. The calculated center of distribution coordinates are then taken as the center of distribution coordinates of the rectangular-shaped color patch and a length in proportion with the standard deviation is taken as the length of one side of the color patch. Note that in the case where the image data ID to be printed is not characteristic, a color patch whose measurement date\time at which the color measurement values were stored in the color measurement data MD may be formed in a location that is different than the location stored in association with that color patch. Doing so makes it possible to spread the locations in which the same color patch is formed throughout multiple timings. When the formation location and size of all of the color patches determined to be formed have been determined, the color patch determination unit P1b adjusts the locations of the color patches in step S176.

Here, in the case where the color patches overlap, the locations thereof are adjusted so that the color patches do not overlap. Doing so makes it possible to form the color patches in locations in which pixels having ink amount gradation values that resemble the ink amount gradation value of the color patches in the ink amount image data IID are present. The size of each color patch corresponds to the spread of the distribution of the pixels having ink amount gradation values that resemble the ink amount gradation values in each color patch. As described thus far, when the ink amount gradation values, location, and size of the color patch to be formed has been determined, the determined color patch is disposed relative to image data of the same number of pixels as the ink amount image data IID, thus generating automatic patch data APD (step S177). The automatic patch data APD is then outputted to the halftone unit P2c (step S178). The processing performed thereafter prints the color patch, in the same manner as the fixed mode (up to step S165). Note that the color patch is printed onto the same printing paper at the same printing resolution as used in the printing of the image data ID.

Although the color measurement of the color patch in the automatic mode is also carried out in the same manner as in the fixed mode, the color patch determination unit P1b specifies the color measurement location of each color patch based on the location and size of the color patch determined/adjusted in steps S173 to S176. As the size of the color patch increases, the color measurement unit P1c sets the range of the five color measurement locations (the upper-left corner, the upper-right corner, the center, the lower-left corner, and the lower-right corner) to a wider range. In the case of the automatic mode, all 72 (18 gradations x 4 colors) color patches are typically not printed/measured, and thus in step S167, the measurement dates/times and color measurement values in the color measurement data MD shown in Fig. 8 are updated for only some of the color patches. Particularly in the case where the ink amount image data IID is not characteristic, of the color measurement values in the color measurement data MD, the color measurement values of the color patches having old measurement dates/times are updated. The correction table AT is created in the automatic mode as well, in the same manner as in the fixed mode (step S168).

However, because all 72 color patches are typically not printed/measured in the automatic mode, the correction table AT is created based on color measurement values having different measurement dates/times. As mentioned above, because the color reproduction characteristics of the printer 20 change over time, it is desirable to create the correction table AT based on color measurement values having new update dates/times. With respect to this point, in this embodiment, in the case where the ink amount image data IID is characteristic, a color patch having ink amount gradation values (frequently-used inks/frequently-appearing ink amounts) that contain more pixels having similar ink amount gradation values to the ink amount image data IID is printed/measured. Accordingly, colors that are characteristic in the image data ID can be reproduced with high accuracy. On the other hand, in the case where the ink amount image data IID is not characteristic, a color patch that has, of the color measurement values in the color measurement data MD, color measurement values that have old measurement dates/times is printed/measured. Accordingly, a calibration accuracy of a specified threshold can be prevented from dropping drastically, and an overall favorable color reproduction accuracy can be realized.

### 3. Setting Process

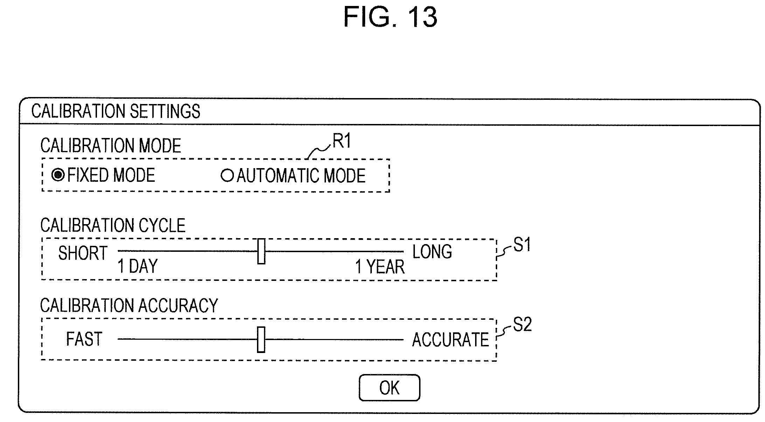

Fig. 13 is a diagram illustrating a UI window for accepting calibration settings. This UI window is displayed in the display 40 by the settings management unit P1a. Input signals from the keyboard 50a and the mouse 50b are accepted during the period in which the UI window is displayed. In this UI window, radio buttons R1 for selecting either the fixed mode or the automatic mode are provided. The mode setting value MP is set by manipulating these radio buttons R1. Slider bars S1 and S2 are provided in the UI window for specifying the cycle setting value FP and the accuracy setting value AP. The cycle setting value FP can be set from 1 day (short) to 365 days (long), whereas the accuracy setting value AP can be set from 0% (fast) to 100% (accurate). An OK button B1 is provided in the UI window, and the state that has been set is obtained by the settings management unit P1a when the OK button B1 has been pressed; the setting values MP, FP, and AP in the settings table PT are then updated in accordance with the state that has been set. In this manner, the user can specify the calibration settings, and a color patch is determined in accordance with those settings; accordingly, forming a number of color patches that the user feels is excessive, expending a large amount of processing time, and so on can be prevented.

### 4. Variation

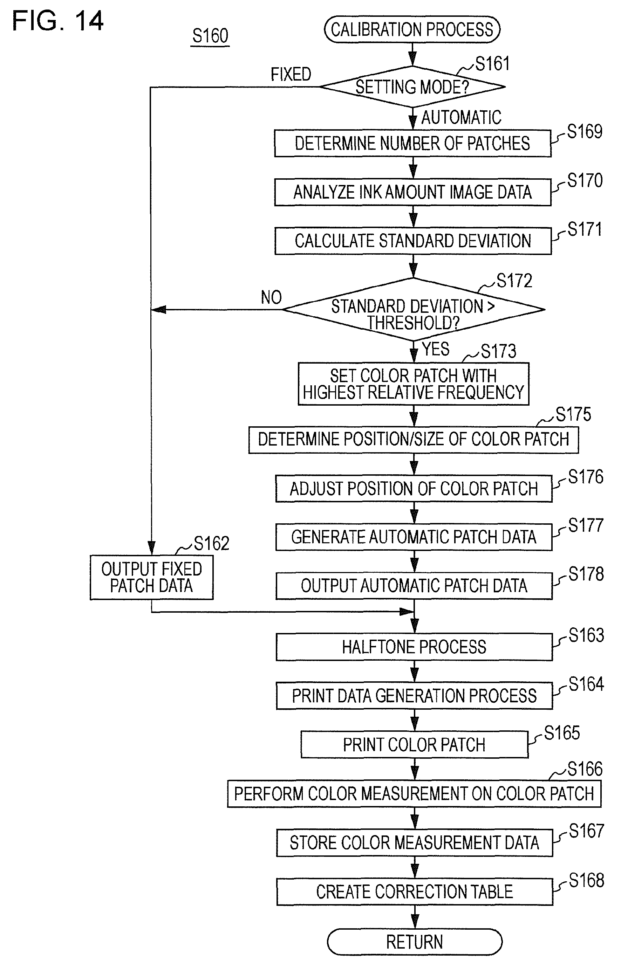

Fig. 14 is a flowchart illustrating a calibration process according to a variation. In this variation, the process moves to the fixed mode in the case where the ink amount image data IID has been determined as not being characteristic, even if the automatic mode is being executed. Doing so makes it possible to improve the overall reproduction accuracy in the case where the ink amount image data IID is not characteristic and it is not known what ink and what ink darkness should be focused on in the execution of the calibration process.

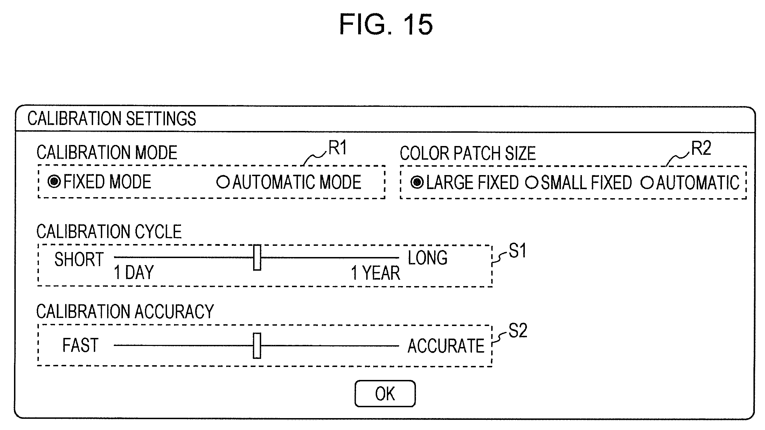

Fig. 15 is a diagram illustrating a UI window for accepting calibration settings according to this variation. In Fig. 15, radio buttons R2, through which the color patch size settings can be selected from among the automatic mode, a large fixed mode, and a small fixed mode, have been added. In the case where the automatic mode has been set, the size of the color patch is determined using the same method as that illustrated in the aforementioned embodiment in step S175. On the other hand, in the case where the large fixed mode or the small fixed mode has been set, a color patch is determined to be formed at a fixed size regardless of the standard deviation of the locations in which the pixels of interest are present. Of course, the size of the color patch formed in the case where the large fixed mode has been set is greater than the size of the color patch formed in the case where the small fixed mode has been set.

## Claims

1. A printing apparatus for forming a printed image by forming ink dots of a plurality of inks based on an ink amount specified for each pixel of which image data is configured, the apparatus comprising:
a determination unit (P1b) configured to analyze the image data and configured to determine a number of color patches to be printed based on the result of the analysis;
a patch printing unit (22) configured to print the determined color patches;
a color measurement unit (P1c) configured to obtain color values indicated in the color patches by performing color measurement on the color patches;
a correction data creation unit (P1d) configured to create correction data based on the color values obtained; and
a printing unit (22) configured to form the ink dots based on the ink amount that has been corrected based on the correction data,
wherein the analysis of the image data and determination of the number of color patches to be printed includes
creating a histogram in which levels whose central value is an ink amount gradation value of fixed color patch data are provided,
calculating a standard deviation of a relative frequency of each of the levels of the histogram in all of the inks, and
determining whether or not the standard deviation is greater than a predetermined threshold (S172),
wherein, if the standard deviation is greater than the threshold, the determination unit (P1b) is configured to specify a frequently-appearing ink amount that is an ink amount appearing more frequently among ink amounts specified for each of the pixels in the image data; and is configured to determine that the color patches are printed based on the frequently-appearing ink amount.

2. The printing apparatus according to claim 1,
wherein the determination unit (P1b) is configured to specify a spatial distribution state of the pixels; and is configured to determine a location at which the color patch is printed based on the distribution state.

3. The printing apparatus according to claim 2,
wherein the determination unit (P1b) is configured to determine the size of the color patch to be printed based on the distribution state.

4. The printing apparatus according to any one of claims 1 to 3, further comprising:
a recording medium (14) configured to store the color patches that have been printed by the printing unit (22) in the past and history data (MD) that holds the color values obtained by performing color measurement on the color patches,
wherein the determination unit (P1b) is configured to determine, by referring to the history data (MD), that a color patch different from the color patch printed immediately previous is to be printed; and
the correction data creation unit (P1d) is configured to create the correction data by integrating the color values held in the history data with the color value obtained by performing color measurement on the color patch different from the color patch printed in the past.

5. A calibration method for calibrating a printing apparatus that forms a printed image by forming ink dots of a plurality of inks based on an ink amount specified for each pixel of which image data is configured, the method comprising:
analyzing the image data (S170) and determining a number of color patches to be printed based on the result of the analysis (S175, S176, S177, S178);
printing the determined color patches (S165);
obtaining color values indicated in the color patches by performing color measurement on the color patches (S166); and
creating correction data based on the color values (S168),
wherein analyzing the image data (S170) and determining a number of color patches to be printed includes
creating a histogram in which levels whose central value is an ink amount gradation value of fixed color patch data are provided,
calculating a standard deviation of a relative frequency of each of the levels of the histogram in all of the inks, and
determining whether or not the standard deviation is greater than a predetermined threshold (S172),
wherein, if the standard deviation is greater than the threshold, specifying a frequently-appearing ink amount that is an ink amount appearing more frequently among ink amounts specified for each of the pixels in the image data; and determining that the color patches are printed based on the frequently-appearing ink amount.

6. A calibration program **characterized by** comprising program code means stored on a computer readable medium for performing the steps of claim 5 when said program is run on a computer.

## Patentansprüche

1. Druckvorrichtung zum Bilden eines gedruckten Bildes durch Ausbilden von Tintenpunkten aus mehreren Tinten, basierend auf einer Tintenmenge, die für jedes Pixel, aus dem Bilddaten zusammengestellt sind, spezifiziert ist, wobei die Vorrichtung umfasst:
eine Bestimmungseinheit (P1b), die dazu ausgestaltet ist, die Bilddaten zu analysieren, und dazu ausgestaltet ist, eine Anzahl von zu druckende Farbfeldern auf der Grundlage der Analyse zu bestimmen;
eine Felddruckeinheit (22), die dazu ausgestaltet ist, die bestimmten Farbfelder zu drucken;
eine Farbmesseinheit (P1c), die dazu ausgestaltet ist, Farbwerte zu erhalten, die in den Farbfeldern angezeigt werden, indem eine Farbmessung an den Farbfeldern durchgeführt wird;
eine Korrekturdatenerzeugungseinheit (P1d), die dazu ausgestaltet ist, Korrekturdaten basierend auf den erhaltenen Farbwerten zu erzeugen; und
eine Druckeinheit (22), die dazu ausgestaltet ist, die Tintenpunkte basierend auf der Tintenmenge, die basierend auf den Korrekturdaten korrigiert wurde, auszubilden,
wobei die Analyse der Bilddaten und die Bestimmung der Zahl von zu druckenden Farbfeldern ein
Erzeugen eines Histogramms, in dem Level bereitgestellt werden, deren Zentralwert ein Grad einer Tintenmenge fester Farbfelddaten ist,
Berechnen einer Standardabweichung einer relativen Frequenz von jedem der Level des Histogramms in allen der Tinten, und
Bestimmen, ob die Standardabweichung größer als ein vorbestimmter Schwellenwert ist (S172) oder nicht, umfasst,
wobei die Bestimmungseinheit (P1b) dazu ausgestaltet ist, wenn die Standardabweichung größer als der Schwellenwert ist, eine häufig erscheinende Tintenmenge zu spezifizieren, welche eine Tintemenge ist, die unter den Tintenmengen, die für jedes der Pixel in den Bilddaten spezifiziert wurden, häufiger erscheint.

2. Druckvorrichtung nach Anspruch 1,
wobei die Bestimmungseinheit (P1b) dazu ausgestaltet ist, einen räumlichen Verteilungszustand der Pixel zu spezifizieren; und dazu ausgestaltet ist, einen Ort zu bestimmen, an dem das Farbfeld basierend auf dem Verteilungszustand gedruckt wird.

3. Druckvorrichtung nach Anspruch 2,
wobei die Bestimmungseinheit (P1b) dazu ausgestaltet ist, die Größe des zu druckenden Farbfeldes basierend auf dem Verteilungszustand zu bestimmen.

4. Druckvorrichtung nach einem der Ansprüche 1 bis 3, ferner umfassend:
ein Aufnahmemedium (14), das dazu ausgestaltet ist, die Farbfelder, die durch die Druckeinheit (22) in der Vergangenheit gedruckt wurden, und historische Daten (MD), welche die Farbwerte halten, die durch das Durchführen der Farbmessung an den Farbfeldern erhalten wurden, zu speichern,
wobei die Bestimmungseinheit (P1b) dazu ausgestaltet ist, durch Bezugnahme auf die historischen Daten (MD) zu bestimmen, dass ein Farbfeld zu drucken ist, das von dem unmittelbar vorhergehenden Farbfeld abweicht; und
die Korrekturdatenerzeugungseinheit (P1d) dazu ausgestaltet ist, die Korrekturdaten durch Integrieren der in den historischen Daten gehaltenen Farbwerte mit dem durch das Durchführen der Farbmessung an dem von dem in der Vergangenheit gedruckten Farbfeld abweichenden Farbfeld erhaltenen Farbwert zu erzeugen.

5. Kalibrierungsverfahren zum Kalibrieren einer Druckvorrichtung, die ein gedrucktes Bild durch Ausbilden von Tintenpunkten aus mehreren Tinten, basierend auf einer Tintenmenge, die für jedes Pixel, aus dem Bilddaten zusammengestellt sind, spezifiziert ist, druckt, wobei das Verfahren umfasst:
Analysieren der Bilddaten (S170) und Bestimmen einer Anzahl von zu druckende Farbfeldern auf der Grundlage der Analyse (S175, S176, S177, S178);
Drucken der bestimmten Farbfelder (S165);
Erhalten von in den Farbfeldern angezeigten Farbwerten durch Durchführen einer Farbmessung an den Farbfeldern (S166); und
Erzeugen von Korrekturdaten basierend auf den Farbwerten (S168),
wobei das Analysieren der Bilddaten (S170) und das Bestimmen einer Zahl von zu druckenden Farbfeldern ein
Erzeugen eines Histogramms, in dem Level bereitgestellt werden, deren Zentralwert ein Grad einer Tintenmenge fester Farbfelddaten ist,
Berechnen einer Standardabweichung einer relativen Frequenz von jedem der Level des Histogramms in allen der Tinten, und
Bestimmen, ob die Standardabweichung größer als ein vorbestimmter Schwellenwert ist oder nicht (S172), umfasst,
wobei, wenn die Standardabweichung größer als der Schwellenwert ist, eine häufig erscheinende Tintenmenge spezifiziert wird, welche eine Tintemenge ist, die häufiger unter den Tintenmengen erscheint, die für jedes der Pixel in den Bilddaten spezifiziert wurden; und bestimmt wird, dass die Farbfelder auf der Grundlage der häufig erscheinenden Tintemenge gedruckt werden.

6. Kalibrierungsprogramm, **dadurch gekennzeichnet, dass** es Programmcodemittel umfasst, die auf einem computerlesbaren Medium gespeichert sind, um die Schritte nach Anspruch 5 auszuführen, wenn das Programm auf einem Computer ausgeführt wird.

## Revendications

1. Appareil d'impression pour former une image d'impression en formant des points d'encre d'une pluralité d'encres sur la base d'une quantité d'encre spécifiée pour chaque pixel dont les données d'image sont configurées, l'appareil comprenant :
une unité de détermination (P1b) configurée pour analyser les données d'image et configurée pour déterminer un nombre de taches de couleur à imprimer sur la base du résultat de l'analyse ;
une unité d'impression de taches (22) configurée pour imprimer les taches de couleur déterminées ;
une unité de mesure des couleurs (P1c) configurée pour obtenir des valeurs de couleur indiquées dans les taches de couleur en effectuant une mesure de couleur sur les taches de couleur ;
une unité de création de données de correction (P1d) configurée pour créer des données de correction sur la base des valeurs de couleur obtenues ; et
une unité d'impression (22) configurée pour former les points d'encre sur la base de la quantité d'encre qui a été corrigée sur la base des données de correction,
dans lequel l'analyse des données d'image et de la détermination du nombre de taches de couleur à imprimer comprend :
la création d'un histogramme dans lequel les niveaux dont la valeur centrale est une valeur de gradation de la quantité d'encre des données de taches de couleur fixe sont fournis,
le calcul d'un écart-type d'une fréquence relative de chacun des niveaux de l'histogramme dans l'ensemble des encres, et
la détermination si oui ou non l'écart-type est supérieur à un seuil prédéterminé (S172),
dans lequel, si l'écart-type est supérieur au seuil, l'unité de détermination (P1b) est configurée pour spécifier une quantité d'encre apparaissant fréquemment qui est une quantité d'encre qui apparaît plus fréquemment parmi les quantités d'encre spécifiées pour chacun des pixels dans les données d'image ; et est configurée pour déterminer que les taches de couleur sont imprimées sur la base de la quantité d'encre apparaissant fréquemment.

2. Appareil d'impression selon la revendication 1,
dans lequel l'unité de détermination (P1b) est configurée pour spécifier un état de distribution spatiale des pixels ; et est configurée pour déterminer un emplacement où la tache de couleur est imprimée sur la base de l'état de distribution.

3. Appareil d'impression selon la revendication 2,
dans lequel l'unité de détermination (P1b) est configurée pour déterminer la taille de la tache de couleur à imprimer sur la base de l'état de distribution.

4. Appareil d'impression selon l'une quelconque des revendications 1 à 3, comprenant en outre :
un support d'enregistrement (14) configuré pour enregistrer les taches de couleur qui ont été imprimées par l'unité d'impression (22) dans le passé et de données historiques (MD) qui contiennent les valeurs de couleur obtenues en effectuant une mesure de couleur sur les taches de couleur,
dans lequel l'unité de détermination (P1b) est configurée pour déterminer, en se référant aux données historiques (MD), qu'une tache de couleur différente de la tache de couleur imprimée immédiatement avant doit être imprimée ; et
l'unité de création de données de correction (P1d) est configurée pour créer les données de correction en intégrant les valeurs de couleur contenues dans les données historiques avec la valeur de couleur obtenue en effectuant la mesure de la couleur sur la tache de couleur différente de la tache de couleur imprimée dans le passé.

5. Procédé d'étalonnage pour étalonner un appareil d'impression qui forme une image imprimée en formant des points d'encre d'une pluralité d'encres sur la base d'une quantité d'encre spécifiée pour chaque pixel dont les données d'image sont configurées, le procédé comprenant :
l'analyse des données d'image (S170) et la détermination d'un certain nombre de taches de couleur à imprimer sur la base du résultat de l'analyse (S175, S176, S177,S178);
l'impression des taches de couleur déterminées (S165) ;
l'obtention de valeurs de couleur indiquées dans les taches de couleur en effectuant une mesure de couleur sur les taches de couleur (S166) ; et
la création de données de correction sur la base des valeurs de couleur (S168),
dans lequel l'analyse des données d'image (S170) et la détermination d'un certain nombre de taches de couleur à imprimer comprend :
la création d'un histogramme dans lequel les niveaux dont la valeur centrale est une valeur de gradation de la quantité d'encre de données de taches de couleur fixe sont fournis,
le calcul d'un écart-type d'une fréquence relative de chacun des niveaux de l'histogramme dans l'ensemble des encres, et
la détermination si oui ou non l'écart-type est supérieur à un seuil prédéterminé (S172),
dans lequel, si l'écart-type est supérieur au seuil, on spécifie une quantité d'encre apparaissant fréquemment qui est une quantité d'encre apparaissant plus fréquemment parmi les quantités d'encre spécifiées pour chacun des pixels dans les données d'image ; et on détermine que les taches de couleur sont imprimées sur la base de la quantité d'encre apparaissant fréquemment.

6. Programme d'étalonnage, **caractérisé en ce qu'**il comprend un moyen de code de programme stocké sur un support lisible par ordinateur pour exécuter les étapes de la revendication 5 lorsque ledit programme est exécuté sur un ordinateur.
